# EUROPÄISCHE PATENTSCHRIFT

(11) **EP 2 862 004 B1**
(45) Veröffentlichungstag und Bekanntmachung des Hinweises auf die Patenterteilung: **06.07.2016**
(21) Anmeldenummer: 13729351.0
(22) Anmeldetag: 17.06.2013
(51) Int. Cl.: G01S 7/52, G01S 15/02, G01S 15/10, G01S 13/93

(54) **VORRICHTUNG UND VERFAHREN ZUR ERZEUGUNG UND AUSWERTUNG VON ULTRASCHALLSIGNALEN, INSBESONDERE ZUR ERMITTLUNG DES ABSTANDES EINES FAHRZEUGS ZU EINEM HINDERNIS**
DEVICE AND METHOD FOR CREATING AND EVALUATING ULTRASOUND SIGNALS, IN PARTICULAR FOR DETERMINING THE DISTANCE BETWEEN AN OBSTACLE AND A VEHICLE
DISPOSITIF ET PROCÉDÉ DE PRODUCTION ET D'ÉVALUATION ET SIGNAUX À ULTRASONS, NOTAMMENT POUR LA DÉTERMINATION DE L'ÉCART ENTRE UN VÉHICULE ET UN OBSTACLE

(30) Priorität: 19.06.2012 EP 12172516
(43) Veröffentlichungstag der Anmeldung: 22.04.2015
(73) Patentinhaber: Elmos Semiconductor Aktiengesellschaft, 44227 Dortmund (DE)
(72) Erfinder: SPIEGEL, Egbert, 44227 Dortmund (DE)
(74) Vertreter: dompatent von Kreisler Selting Werner - Partnerschaft von Patent- und Rechtsanwälten mbB
(86) Internationale Anmeldenummer: PCT/EP2013/062521
(87) Internationale Veröffentlichungsnummer: WO 2013/189887

(56) Entgegenhaltungen:
- EP-A1- 2 081 052
- DE-A1-102010 033 213
- US-A- 4 975 889

## Beschreibung

Die Erfindung betrifft eine Vorrichtung sowie ein Verfahren zur Erzeugung und Auswertung von Ultraschallsignalen, insbesondere zur Ermittlung des Abstandes eines Fahrzeugs zu einem Hindernis.

Derartige Vorrichtungen werden auch als Park Distance Control (PDC) Systeme bezeichnet und dienen als Hilfsmittel beim Einparken eines Fahrzeugs. Derartige Systeme weisen mehrere Ultraschallgeber sowie Ultraschallaufnehmer auf, wobei jeweils ein Ultraschallgeber und ein Ultraschallaufnehmer zu einem Ultraschall-Transducer zusammengefasst ausgeführt sein können. Wenn ein ausgesendetes Ultraschallsignal von einem Hindernis oder Gegenstand innerhalb eines vorgebbaren Sicherheitsabstands in einem überwachten Bereich nahe dem Fahrzeug reflektiert wird, kann im empfangenen Signal ein Echo detektiert werden. Leider ist die Echodetektion nicht eindeutig, was mit Streuungen, Störungen und Rauschsignalanteilen zusammenhängt. Die Entscheidung, ob ein Echo empfangen worden ist oder nicht, erfolgt zumeist anhand eines Vergleichs des Empfangssignals mit einem Schwellwert. Zweckmäßig ist es, wenn die Schwellwertberechnung automatisch erfolgt und der Schwellwert dementsprechend nachgeführt wird. Eine derartige Schwellwertnachführung und -berechnung ist beispielsweise in DE-C-197 21 835 beschrieben.

Die Schwellwertberechnung und -nachführung ist vergleichsweise rechenintensiv. Es fallen eine Vielzahl von Daten an. Üblicherweise sind mehrere Ultraschalltransducer über ein Datenbussystem mit einer zentralen Steuereinheit verbunden. Die Schwellwertnachführung und -berechnung bedeutet demnach, dass über den Datenbus vergleichsweise große Datenmengen gesendet und empfangen werden müssten. Das aber setzt einen leistungsfähigen und damit vergleichsweise teuren Datenbus voraus. Will man hingegen einen einfachen Datenbus verwenden, so müsste die Verarbeitung der Empfangssignale für die Schwellwertnachführung und -berechnung dezentral in jedem Teilnehmer, d.h. in der jedem Ultraschalltransducer nachgeschalteten Elektronik, erfolgen. Das wiederum ist ebenfalls aufwendig.

Aus EP-A-2 081 052 ist eine Detektionsvorrichtung bzw. ein Detektionsverfahren zur Erkennung von Fahrzeugen im Umfeld eines fahrenden Fahrzeuges nach dem Oberbegriff des Anspruchs 1 bzw. Anspruchs 8 bekannt. Hierbei soll insbesondere der Bereich der "Toten Winkel" überwacht werden. Für die Funktionssicherheit der bekannten Detektionsvorrichtung ist die kontinuierliche Überwachung der eingesetzten Ultraschallsender und - empfänger von entscheidender Bedeutung. Die von diesen Funktionselementen erfassten Signale werden einem kontinuierlichen, zyklischen oder auch stichprobenartigen Vergleich unterzogen. Bei Aussetzen der Signale eines der Funktionselemente erfolgt eine Einstellung respektive Parametrierung von dessen Sende-/Empfangsbereich auf einen zu erfassenden Fahrbahngrund, und zwar dergestalt, dass das relevante Funktionselement im Falle der Funktionstüchtigkeit zwangsläufig zum Empfang von Signal-Reflektionen via Fahrbahngrund eingestellt ist. Damit ist eine Blindheitserkennung durch die Korrelation der Signale aus den messenden Sensoren bzw. Funktionselementen gegeben. Die einzelnen Funktionselemente sind bei diesem bekannten Verfahren über Datenleitungen mit einem Steuergerät verbunden. Über die Strukturierung der Daten wird in der zuvor genannten Schrift nichts weiter ausgesagt.

DE-A-10 2010 033 213 beschreibt ein Verfahren und eine Vorrichtung zur Auswertung von Signalen eines Ultraschallsensors für die Umfelderfassung. Dabei sind mehrere Ultraschallsender und -empfänger über einen Bus mit einer Zentraleinheit verbunden. Die Sensoren erkennen aufgrund der zeitlichen Abstände von Echosignalfolgen korrespondierende Cluster, um dann diese Clusterinformationen zur Zentraleinheit und damit unter Reduktion der Buslast zu übertragen.

Eine weitere Ultraschall-Messvorrichtung zur Entfernungsmessung ist aus US-A-4 975 889 bekannt.

Aufgabe der Erfindung ist es, eine Vorrichtung und ein Verfahren zur Erzeugung und Auswertung von Ultraschallsignalen, insbesondere zur Ermittlung eines Abstandes eines Fahrzeugs zu einem Hindernis, zu schaffen, bei denen eine automatische Schwellwertberechnung und -nachführung erfolgen soll, wobei allerdings vereinfachte Hardware-Komponenten verwendet werden sollen.

Zur Lösung dieser Aufgabe werden mit der Erfindung gemäß Anspruch 1 bzw. Anspruch 8 eine Vorrichtung und ein Verfahren zur Erzeugung und Auswertung von Ultraschallsignalen, insbesondere zur Ermittlung des Abstandes eines Fahrzeugs zu einem Hindernis, vorgeschlagen. Einzelne Ausgestaltungen der Erfindung sind Gegenstand der Unteransprüche.

Nach der Erfindung ist sinngemäß vorgesehen, dass die automatische Schwellwertberechnung und -nachführung zentral in einer Ansteuer- und Auswerteeinheit durchgeführt wird, die über einen Datenbus mit den Ultraschallsender- und den Ultraschallempfänger-Teilnehmern verbunden ist. Jeder Ultraschallsender-Teilnehmer weist einen Ultraschallgeber zum Aussenden eines mehrere Ultraschallpulse aufweisenden Burst-Sendesignals mit einer Burst-Länge auf. Jeder Ultraschallempfänger-Teilnehmer ist mit einem Ultraschallaufnehmer zum Empfang eines Ultraschallsignals versehen. Bei diesem Ultraschall-Empfangssignal handelt es sich beispielsweise um das an einem Hindernis reflektierte Burst-Sendesignal, das von einem Ultraschallsender-Teilnehmer ausgesendet worden ist. Dem Ultraschallaufnehmer nachgeschaltet ist eine Signalverarbeitungseinheit zur Verarbeitung des empfangenen Ultraschallsignals. Hierbei wird das empfangene Ultraschallsignal in einzelne Zeitabschnitte, sogenannte Zellen, unterteilt, die im Wesentlichen gleich der Hälfte der Burst-Länge sind. Diese Unterteilung des Empfangssignals wird mit Beginn des Aussendens des Ultraschall-Burst-Sendesignals durchgeführt.

Erfindungsgemäß ist nun die Übertragung der Daten von den Ultraschallempfänger-Teilnehmern zur Ansteuer- und Auswerteeinheit reduziert. Jeder Ultraschallempfänger-Teilnehmer sendet nämlich im Wesentlichen lediglich den Spitzenwert des Empfangssignals pro Zelle. Die Spitzenwerte pro Zelle reichen aus, um in der Ansteuer- und Auswerteeinheit eine automatische Schwellwertberechnung und - nachführung durchzuführen.

Mithilfe der reduzierten Datenmenge ist es also erfindungsgemäß möglich, eine automatische Schwellwertberechnung und -nachführung durchzuführen. Die Erfindung bietet somit die Möglichkeit, die Echo-Daten zeitgleich mit der Entstehung zu übertragen und extern und ohne nennenswerten Verlust zu verarbeiten. Bei einer Schwellwertberechnung im Ultraschallempfänger-Teilnehmer-IC kann auf einen umfangreichen Zwischenspeicher verzichtet werden. Die Erfindung nutzt also die Schwellwertnachführung- und berechnung auf Basis kleinstmöglicher Datenmengen, die von den Ultraschallempfänger-Teilnehmern und nach Auswertung der Ultraschallempfangssignale übertragen werden. Eine derartige Schwellwertberechnung und -nachführung ist insbesondere unter dem Aspekt sinnvoll, dass nun eine sichere Detektion von Objekten auf größere Distanzen auch bei stark wechselnden Umgebungsbedingungen (Tiefgarage, freies Feld) möglich ist.

In vorteilhafter Weiterbildung der Erfindung ist vorgesehen, dass die Signalverarbeitungseinheit des mindestens einen Ultraschallempfänger-Teilnehmers pro Zeitabschnitt auch den Mittelwert des Empfangssignals ermittelt und dass der mindestens eine Ultraschallempfänger-Teilnehmer auch die Mittelwerte pro Zeitabschnitt über den Datenbus an die Ansteuer- und Auswerteeinheit überträgt. Durch die zusätzliche Übertragung des Mittelwerts des Empfangssignals pro Zeitabschnitt, d. h. pro Zelle, kann die automatische Schwellwertberechnung und -nachführung noch genauer durchgeführt werden. Da nun pro Zeitabschnitt des Empfangssignals ein Mittelwert übertragen worden ist, kann die Ansteuer- und Auswerteeinheit aus diesen Mittelwerten den Mittelwert des Empfangssignals über all seine Zeitabschnitte berechnen. Diese Berechnung kann wiederum in die automatische Schwellwertberechnung und -nachführung eingehen.

Zweckmäßig ist es, wenn an den Datenbus mehrere Ultraschallsender-Teilnehmer und mehrere Ultraschallempfänger-Teilnehmer angeschlossen sind.

Wie bereits zuvor erwähnt, kann der mindestens eine Ultraschallsender-Teilnehmer und der mindestens eine Ultraschallempfänger-Teilnehmer oder jeweils ein Paar aus Ultraschallsender-Teilnehmer und Ultraschallempfänger-Teilnehmer als ein gemeinsamer Teilnehmer des Datenbus konzipiert sein, wobei der Ultraschallgeber und der Ultraschallaufnehmer als eine Einheit in Form eines Ultraschall-Transducers ausgebildet ist.

Desweiteren ist es möglich, dass an den Datenbus mehrere Ultraschallempfänger-Teilnehmer angeschlossen sind, wobei die Anzahl an Ultraschallempfänger-Teilnehmern größer oder kleiner ist als die Anzahl an Ultraschallsender-Teilnehmern.

Schließlich ist bei einer weiteren Ausgestaltung der Erfindung vorgesehen, dass die Ansteuer- und Auswerteeinheit anhand der über den Datenbus empfangenen Spitzenwerte und gegebenenfalls Mittelwerte pro Zeitabschnitt des Empfangssignals des mindestens einen Ultraschallempfänger-Teilnehmers ein potentielles Echo detektiert und anhand der Zeitdauer zwischen dem Beginn des Aussendens des Ultraschall-Burst-Sendesignals und dem Auftreten des Echos den Abstand zu einem potentiellen Hindernis ermittelt.

Bei den bekannten Verfahren zur automatischen Schwellwerterzeugung und - nachführung bei Systemen mit z.B. Datenbus und an diesen angeschlossenen ICs mehrerer Ultraschallempfänger-Teilnehmer wird der Messbereich in einzelne Abschnitte (sogenannte Zellen) unterteilt, was bedeutet, dass das Ultraschallempfangssignal in diese Zeitabschnitte unterteilt wird. Die Zeitabschnitte bzw. Zellen weisen eine Länge auf, die im Wesentlichen gleich der halben Puls-(Burst-)Länge sind. Die Größe der Abschnitte entspricht der Auflösung zweier Echosignale. Zur Berechnung des Schwellwerts im Bereich einer Zelle X werden im Stand der Technik die Verläufe des Empfangssignals in den Zellen links und rechts der betrachteten Zelle herangezogen. Allen bekannten Verfahren ist gemeinsam, dass sie den Mittelwert der Empfangssignale in den Zellen betrachten.

Das erfindungsgemäße Verfahren unterscheidet sich vom Stand der Technik, indem die Mittelwerte nicht notwendigerweise in die Berechnungen einbezogen werden. Zur Entscheidung, ob ein Echo vorliegt, wird der so berechnete Schwellwert mit dem Echosignal verglichen. Das Echosignal muss hierzu zwischengespeichert werden. Versuche haben gezeigt, dass es in der Praxis völlig ausreichend ist, nur den Spitzenwert des Echosignals pro Zelle zu betrachten. Die Ortsauflösung sinkt zwar geringfügig, aber es ist sichergestellt, dass kein Echo verloren geht, sämtliche Echos also erkannt werden. Das Echosignal selbst wird in seinen wesentlichen Bestandteilen (insbesondere bezüglich seiner Signalhöhen) durch die Spitzenwerte pro Zelle korrekt wiedergegeben. Durch einen weiteren Verzicht auf Ortsauflösung, was bei weit entfernt angeordneten, noch zu detektierenden Objekten gerechtfertigt ist, kann durch eine Vergrößerung der Zellen die Datenmenge pro Empfangssignal weiter reduziert werden.

## Patentansprüche

1. Vorrichtung zur Erzeugung und Auswertung von Ultraschallsignalen, insbesondere zur Ermittlung des Abstandes eines Fahrzeugs zu einem Hindernis, mit
- einem Datenbus zur Übertragung von Nutz- und Ansteuerdaten zwischen mindestens einem Ultraschallsender-Teilnehmer, mindestens einem Ultraschallempfänger-Teilnehmer und einer zentralen Ansteuer- und Auswerteeinheit zur Ansteuerung des mindestens einen Ultraschallsender-Teilnehmers und des mindestens einen Ultraschallempfänger-Teilnehmers und zur unter Nachführung eines Schwellwerts erfolgende Auswertung des Empfangssignals des Ultraschallempfänger-Teilnehmers, ob dieses in zumindest einem Zeitabschnitt größer als das oder gleich dem nachgeführten Schwellwert ist, zwecks Ermittlung des Abstandes zu einem Hindernis erfolgt, sofern ein solches innerhalb eines Abstandsbereichs vorgebbarer Größe vorhanden ist,
- wobei der Ultraschallsender-Teilnehmer einen Ultraschallgeber zum Aussenden eines mehrere Ultraschallpulse aufweisenden Burst-Sendesignals mit einer Burst-Länge aufweist und
- wobei der Ultraschallempfänger-Teilnehmer einen Ultraschallaufnehmer zum Empfang eines an einem Hindernis reflektierten Burst-Sendesignals als Ultraschall-Empfangssignal und eine Signalverarbeitungseinheit zur Verarbeitung des ab dem Beginn eines Aussendens des Ultraschall-Burst-Sendesignals in einzelne Zeitabschnitte unterteilten, von dem Ultraschallaufnehmer empfangenen Empfangssignals aufweist,
- wobei die Signalverarbeitungseinheit pro Zeitabschnitt einen Wert des Empfangssignals ermittelt,
- wobei der mindestens eine Ultraschallempfänger-Teilnehmer über den Datenbus die Spitzenwerte der Zeitabschnitte des Empfangssignals an die zentrale Ansteuer- und Auswerteeinheit überträgt und
- wobei die Ansteuer- und Auswerteeinheit anhand der von dem mindestens einen Ultraschallempfänger-Teilnehmer über den Datenbus erhaltenen Spitzenwerte, insbesondere zur Ermittlung des Abstandes zu einem potentiellen Hindernis, ermittelt, ob das Empfangssignal in zumindest einem der Zeitabschnitte größer als der nachgeführte oder gleich dem nachgeführten Schwellwert ist,
**dadurch gekennzeichnet ,**
- **dass** das von dem Ultraschallaufnehmer empfangene Empfangssignal in einzelne Zeitabschnitte mit einer im Wesentlichen der Hälfte der Burst-Länge gleichenden Länge unterteilt ist und
- **dass** die Signalverarbeitungseinheit pro Zeitabschnitt einen Spitzenwert des Empfangssignals ermittelt,
- wobei lediglich diese Spitzenwerte an die zentrale Ansteuer- und Auswerteeinheit übertragen werden und für einen Schwellenwertvergleich herangezogen werden, um zu ermitteln, ob das Empfangssignal in zumindest einem der Zeitabschnitte größer als der nachgeführte oder gleich dem nachgeführten Schwellwert ist.

2. Vorrichtung nach Anspruch 1, **dadurch gekennzeichnet, dass** die Signalverarbeitungseinheit des mindestens einen Ultraschallempfänger-Teilnehmers pro Zeitabschnitt auch den Mittelwert des Empfangssignals ermittelt und dass der mindestens eine Ultraschallempfänger-Teilnehmer die Mittelwerte pro Zeitabschnitt über den Datenbus an die Ansteuer- und Auswerteeinheit überträgt.

3. Vorrichtung nach Anspruch 1 oder 2, **dadurch gekennzeichnet, dass** an den Datenbus mehrere Ultraschallsender-Teilnehmer und mehrere Ultraschallempfänger-Teilnehmer angeschlossen sind.

4. Vorrichtung nach einem der Ansprüche 1 bis 3, **dadurch gekennzeichnet, dass** der mindestens eine Ultraschallsender-Teilnehmer und der mindestens eine Ultraschallempfänger-Teilnehmer oder jeweils ein Paar aus Ultraschallsender-Teilnehmer und Ultraschallempfänger-Teilnehmer als ein gemeinsamer Teilnehmer des Datenbus konzipiert ist, wobei der Ultraschallgeber und der Ultraschallaufnehmer als eine Einheit in Form eines Ultraschall-Transducers ausgebildet ist.

5. Vorrichtung nach einem der Ansprüche 1 bis 3, **dadurch gekennzeichnet, dass** an den Datenbus mehrere Ultraschallempfänger-Teilnehmer angeschlossen sind, wobei die Anzahl an Ultraschallempfänger-Teilnehmern größer ist als die Anzahl an Ultraschallsender-Teilnehmer.

6. Vorrichtung nach einem der Ansprüche 1 bis 5, **dadurch gekennzeichnet, dass** die Ansteuer- und Auswerteeinheit anhand der über den Datenbus empfangenen Spitzenwerte und gegebenenfalls Mittelwerte pro Zeitabschnitt des Empfangssignals des mindestens einen Ultraschallempfänger-Teilnehmers ein potentielles Echo detektiert und anhand der Zeitdauer zwischen dem Beginn des Aussendens des Ultraschall-Burst-Sendesignals und dem Auftreten des Echos den Abstand zu einem potentiellen Hindernis ermittelt.

7. Vorrichtung nach einem der Ansprüche 1 bis 6, **dadurch gekennzeichnet, dass** die unter Nachführung eines Schwellwerts erfolgende Auswertung des Empfangssignals des Ultraschallempfänger-Teilnehmers, ob dieses in zumindest einem Zeitabschnitt größer als das oder gleich dem nachgeführten Schwellwert ist, zwecks Ermittlung des Abstandes zu einem Hindernis erfolgt, sofern ein solches innerhalb eines Abstandsbereichs vorgebbarer Größe vorhanden ist,

8. Verfahren zur Erzeugung und Auswertung von Ultraschallsignalen, insbesondere zur Ermittlung des Abstandes eines Fahrzeugs zu einem Hindernis, wobei bei dem Verfahren
- von mindestens einem Ultraschallempfänger-Teilnehmer eines Datenbus ein Ultraschall-Empfangssignal empfangen wird, nachdem von mindestens einem Ultraschallsender-Teilnehmer des Datenbus ein mehrere Ultraschallpulse umfassendes Burst-Sendesignal mit einer Burst-Länge ausgesendet worden ist,
- das Ultraschall-Empfangssignal in Zeitabschnitt unterteilt wird, und
- pro Zeitabschnitt des Ultraschall-Empfangssignals ein Wert über den Datenbus an eine zentrale Ansteuer- und Auswerteeinheit übertragen wird,
**dadurch gekennzeichnet,**
- **dass** das Ultraschall-Empfangssignal in Zeitabschnitte mit einer im Wesentlichen der Hälfte der Burst-Länge gleichenden Länge unterteilt wird,
- **dass** pro Zeitabschnitt des Ultraschall-Empfangssignals dessen jeweiliger Spitzenwert an die zentrale Ansteuer- und Auswerteeinheit übertragen wird und
- **dass** in der Ansteuer- und Auswerteeinheit anhand der Spitzenwerte des Ultraschall-Empfangssignals pro Zeitabschnitt unter Berücksichtigung einer Schwellwertnachführung ermittelt wird, ob das Ultraschall-Empfangssignal Zeitabschnitte aufweist, in denen das Ultraschall-Empfangssignal größer als der nachgeführte oder gleich dem nachgeführten Schwellwert ist.

9. Verfahren nach Anspruch 8, **dadurch gekennzeichnet, dass** die Signalverarbeitungseinheit des mindestens einen Ultraschallempfänger-Teilnehmers pro Zeitabschnitt auch den Mittelwert des Empfangssignals ermittelt und dass der mindestens eine Ultraschallempfänger-Teilnehmer die Mittelwerte pro Zeitabschnitt über den Datenbus an die Ansteuer- und Auswerteeinheit überträgt.

10. Verfahren nach Anspruch 8 oder 9, **dadurch gekennzeichnet, dass** an den Datenbus mehrere Ultraschallsender-Teilnehmer und mehrere Ultraschallempfänger-Teilnehmer angeschlossen sind.

11. Verfahren nach einem der Ansprüche 8 bis 10, **dadurch gekennzeichnet, dass** der mindestens eine Ultraschallsender-Teilnehmer und der mindestens eine Ultraschallempfänger-Teilnehmer oder jeweils ein Paar aus Ultraschallsender-Teilnehmer und Ultraschallempfänger-Teilnehmer als ein gemeinsamer Teilnehmer des Datenbus konzipiert ist, wobei der Ultraschallgeber und der Ultraschallaufnehmer als eine Einheit in Form eines Ultraschall-Transducers ausgebildet ist.

12. Verfahren nach einem der Ansprüche 8 bis 10, **dadurch gekennzeichnet, dass** an den Datenbus mehrere Ultraschallempfänger-Teilnehmer angeschlossen sind, wobei die Anzahl an Ultraschallempfänger-Teilnehmern größer ist als die Anzahl an Ultraschallsender-Teilnehmer.

13. Verfahren nach einem der Ansprüche 8 bis 12, **dadurch gekennzeichnet, dass** die Ansteuer- und Auswerteeinheit anhand der über den Datenbus empfangenen Spitzenwerte und gegebenenfalls Mittelwerte pro Zeitabschnitt des Empfangssignals des mindestens einen Ultraschallempfänger-Teilnehmers ein potentielles Echo detektiert und anhand der Zeitdauer zwischen dem Beginn des Aussendens des Ultraschall-Burst-Sendesignals und dem Auftreten des Echos den Abstand zu einem potentiellen Hindernis ermittelt.

## Claims

1. A device for generating and evaluating ultrasound signals, particularly for determining the distance of a vehicle to an obstacle, comprising
- a data bus for transmission of useful data and control data between at least one ultrasound transmitter subscriber, at least one ultrasound receiver subscriber and a central control and evaluation unit for controlling the at least one ultrasound transmitter subscriber and the at least one ultrasound receiver subscriber and for evaluation of the received signal of the ultrasound receiver subscriber, performed while tracking a threshold value, under the aspect of whether this received signal at least for a time section is larger than or equal to the tracked threshold value, particularly for obtaining the distance to an obstacle if such an obstacle exist within a distance area of a presettable size,
- the ultrasound transmitter subscriber comprising an ultrasonic transmitter for emitting a burst transmission signal which has a burst length and comprises a plurality of ultrasonic pulses, and
- the ultrasound receiver subscriber comprising an ultrasonic receiver for receiving, as an ultrasonic received signal, a burst transmission signal reflected at an obstacle, and comprising a signal processing unit for processing the received signal received by the ultrasonic receiver, with the received signal being divided, from the start of an emission of the ultrasound burst transmission signal, into individual time sections,
- wherein the signal processing unit is operative to determine, for each time section, a value of the received signal,
- wherein the at least one ultrasound receiver subscriber is operative to transmit the peak values of the time sections of the received signal via the data bus to the central control and evaluation unit, and
- wherein, on the basis of the peak values received from the at least one ultrasound receiver subscriber via the data bus, the control and evaluation unit, particularly for obtaining the distance to a potential obstacle, is operative to detect whether the received signal in at least one of the time sections is larger than or equal to the tracked threshold value,
**characterized in**
- **that** the received signal received by the ultrasonic receiver is divided into individual time sections of a length substantially equal to half of the burst length, and
- the signal processing unit is operative to determine, for each time section, a peak value of the received signal,
- wherein only these peak values are transmitted to the central control and evaluation unit and are used for a threshold value comparison for determining whether the received signal in at least one of the time sections is larger than or equal to the tracked threshold value.

2. The device according to claim 1, **characterized in that** the signal processing unit of the at least one ultrasound receiver subscriber is operative to detect, for each time section, also the average value of the received signal and that the at least one ultrasound receiver subscriber is operative to transmit, via the data bus, the average values for each time section to the control and evaluation unit.

3. The device according to claim 1 or 2, **characterized in that** the data bus has connected to it a plurality of ultrasound transmitter subscribers and a plurality of ultrasound receiver subscribers.

4. The device according to any one of claims 1 to 3, **characterized in that** the at least one ultrasound transmitter subscriber and the at least one ultrasound receiver subscriber or respectively a pair of ultrasound transmitter subscriber and ultrasound receiver subscriber are designed as a common subscriber of the data bus, the ultrasound transmitter and the ultrasound receiver being combined into one unit in the form of an ultrasound transducer.

5. The device according to any one of claims 1 to 3, **characterized in that** the data bus has a plurality of ultrasound receiver subscribers connected to it, the number of the ultrasound receiver subscribers being larger than the number of ultrasound receiver subscribers.

6. The device according to any one of claims 1 to 5, **characterized in that**, on the basis of the peak values and optionally average values for each time section of the received signal of the at least one ultrasound receiver subscriber as received via the data bus, the control and evaluation unit is operative to detect a potential echo and, on the basis of the length of time between the start of the emission of the ultrasound burst transmission signal and the occurrence of the echo, to determine the distance to a potential obstacle.

7. The device according to any one of claims 1 to 6, **characterized in that** evaluation of the received signal of the ultrasound receiver subscriber, performed while tracking a threshold value, under the aspect of whether this received signal at least for a time section is larger than or equal to the tracked threshold value, is performed for detection of the distance to an obstacle if an obstacle exists within a distance range of a predetermined size.

8. A method for generating and evaluating ultrasound signals, particularly for determining the distance of a vehicle to an obstacle, wherein, in said method
- an ultrasound received signal is received by at least one ultrasound receiver subscriber of a data bus after a burst transmission signal having a burst length and comprising a plurality of ultrasonic pulses has been emitted by at least one ultrasound transmitter subscriber of the data bus,
- the ultrasound received signal is divided into time sections,
- for each time section of the ultrasound received signal, a value is transmitted via the data bus to a central control and evaluation unit,
**characterized in**
- **that** the ultrasound received signal is divided into time sections of a length substantially equal to half of the burst length,
- for each time section of the ultrasound received signal, the respective peak value of the ultrasound received signal is transmitted to the central control and evaluation unit, and
- on the basis of the peak values of the ultrasound received signal for each time section, it is determined in the control and evaluation unit under consideration of a threshold value tracking whether the ultrasound received signal comprises time sections in which the ultrasound received signal is larger than or equal to the tracked threshold value.

9. The method according to claim 8, **characterized in that** the signal processing unit of the at least one ultrasound receiver subscriber is operative to detect, for each time section, also the average value of the received signal, and that the at least one ultrasound receiver subscriber is operative to transmit, via the data bus, the average values for each time section to the control and evaluation unit.

10. The method according to claim 8 or 9, **characterized in that** the data bus has connected to it a plurality of ultrasound transmitter subscribers and a plurality of ultrasound receiver subscribers.

11. The method according to any one of claims 8 to 10, **characterized in that** the at least one ultrasound transmitter subscriber and the at least one ultrasound receiver subscriber or respectively a pair of ultrasound transmitter subscriber and ultrasound receiver subscriber are designed as a common subscriber of the data bus, the ultrasound transmitter and the ultrasound receiver being combined into one unit in the form of an ultrasound transducer.

12. The method according to any one of claims 8 to 10, **characterized in that** the data bus has a plurality of ultrasound receiver subscribers connected to it, the number of the ultrasound receiver subscribers being larger than the number of ultrasound receiver subscribers.

13. The method according to any one of claims 8 to 12, **characterized in that**, on the basis of the peak values and optionally average values for each time section of the received signal of the at least one ultrasound receiver subscriber as received via the data bus, the control and evaluation unit is operative to detect a potential echo and, on the basis of the length of time between the start of the emission of the ultrasound burst transmission signal and the occurrence of the echo, to determine the distance to a potential obstacle.

## Revendications

1. Dispositif de production et d'évaluation de signaux à ultrasons, notamment pour la détermination de la distance entre un véhicule et un obstacle, comprenant
- un bus de données pour la transmission de données utiles et de données de commande entre au moins un participant à émetteur d'ultrasons, au moins un participant à récepteur d'ultrasons et une unité centrale de commande et d'exploitation pour la commande dudit au moins un participant à émetteur d'ultrasons et dudit au moins un participant à récepteur d'ultrasons et pour l'évaluation, effectuée avec mise à jour d'une valeur seuil, du signal de réception du participant à récepteur d'ultrasons, si celui-ci est supérieur ou égal, dans au moins une période, à la valeur de seuil mise à jour, au vu d'une détermination de la distance séparant d'un obstacle, dans la mesure où un tel est présent dans une plage de distances ayant des dimensions qui peuvent être prédéterminées,
- le participant à émetteur d'ultrasons comprenant un émetteur d'ultrasons pour émettre un signal d'émission de type burst comprenant plusieurs impulsions à ultrasons, avec une longueur burst et
- le participant à récepteur d'ultrasons comprenant un récepteur d'ultrasons pour la réception d'un signal d'émission réfléchi par un obstacle, comme signal de réception à ultrasons et une unité de traitement de signal pour le traitement du signal de réception reçu par le récepteur d'ultrasons et subdivisé, dès le début d'une émission du signal d'émission à ultrasons de type burst, en des périodes individuelles,
- l'unité de traitement de signal déterminant une valeur du signal de réception par période,
- ledit au moins un participant à récepteur d'ultrasons transmettant les valeurs crêtes des périodes du signal de réception via le bus de données à l'unité centrale de commande et d'exploitation et
- l'unité centrale de commande et d'exploitation déterminant, sur la base des valeurs crêtes reçues par ledit au moins un participant à récepteur d'ultrasons via le bus de données, notamment pour la détermination de la distance séparant d'un obstacle, si le signal de réception est supérieur ou égal, dans au moins une période, à la valeur de seuil mise à jour,
**caractérisé en ce que**
- le signal de réception reçu par le récepteur d'ultrasons est subdivisé en des périodes individuelles avec une longueur correspondant sensiblement à la moitié de la longueur burst et
- l'unité de traitement de signal détermine une valeur crête du signal de réception par période,
- uniquement lesdites valeurs crêtes étant transmises à l'unité centrale de commande et d'exploitation et utilisées pour une comparaison de valeurs seuils, pour déterminer si le signal de réception est supérieur ou égal, dans au moins une des périodes, à la valeur de seuil mise à jour.

2. Dispositif selon la revendication 1, **caractérisé en ce que** l'unité de traitement de signal dudit au moins un participant à récepteur d'ultrasons détermine également, par période, la valeur moyenne du signal de réception et **en ce que** ledit au moins un participant à récepteur d'ultrasons transmet les valeurs moyennes par période à l'unité de commande et d'exploitation via le bus de données.

3. Dispositif selon la revendication 1 ou 2, **caractérisé en ce que** plusieurs participants à émetteur d'ultrasons et plusieurs participants à récepteur d'ultrasons sont connectés au bus de données.

4. Dispositif selon l'une des revendications 1 à 3, **caractérisé en ce que** ledit au moins un participant à émetteur d'ultrasons et ledit au moins un participant à récepteur d'ultrasons ou respectivement une paire formée par un participant à émetteur d'ultrasons et un participant à récepteur d'ultrasons sont conçus comme un participant commun du bus de données, l'émetteur d'ultrasons et le récepteur d'ultrasons étant conçus comme une unité sous la forme d'un transducteur à ultrasons.

5. Dispositif selon l'une des revendications 1 à 3, **caractérisé en ce que** plusieurs participants à récepteur d'ultrasons sont connectés au bus de données, le nombre de participants à récepteur d'ultrasons étant supérieur au nombre de participants à émetteur d'ultrasons.

6. Dispositif selon l'une des revendications 1 à 5, **caractérisé en ce que** l'unité de commande et d'exploitation détecte un écho potentiel sur la base des valeurs crêtes et, le cas échéant, des valeurs moyennes par période du signal de réception dudit au moins un participant à récepteur d'ultrasons, reçues via le bus de données et détermine sur la base de la durée de temps entre le début de l'émission d'un signal d'émission à ultrasons de type burst et l'apparition de l'écho, la distance séparant d'un obstacle potentiel.

7. Dispositif selon l'une des revendications 1 à 6, **caractérisé en ce que** l'évaluation du signal de réception du participant à récepteur d'ultrasons effectuée avec mise à jour d'une valeur seuil, si celui-ci est supérieur ou égal, dans au moins une période, à la valeur de seuil mise à jour, est effectuée au vu de la détermination de la distance séparant d'un obstacle, dans la mesure où un tel est présent dans une plage de distances ayant des dimensions qui peuvent être prédéterminées.

8. Procédé pour la production et l'évaluation de signaux à ultrasons, notamment pour la détermination de la distance entre un véhicule et un obstacle, selon lequel procédé
- un signal de réception à ultrasons est reçu par au moins un participant à récepteur d'ultrasons d'un bus de données après qu'un signal d'émission de type burst comprenant plusieurs impulsions à ultrasons avec une longueur burst a été émis par au moins un participant à émetteur d'ultrasons du bus de données,
- le signal de réception à ultrasons est subdivisé en des périodes individuelles et
- par période du signal de réception à ultrasons, une valeur est transmise via le bus de données à une unité centrale de commande et d'exploitation,
**caractérisé en ce que**
- le signal de réception à ultrasons est subdivisé en des périodes individuelles avec une longueur correspondant sensiblement à la moitié de la longueur burst,
- par période du signal de réception à ultrasons, sa valeur crête respective est transmise à l'unité centrale de commande et d'exploitation et
- dans l'unité centrale de commande et d'exploitation, il est déterminé par période, sur la base des valeurs crêtes du signal de réception à ultrasons, en prenant en compte une mise à jour d'une valeur seuil, si le signal de réception à ultrasons comprend des périodes dans lesquelles le signal de réception à ultrasons est supérieur ou égal à la valeur de seuil mise à jour.

9. Procédé selon la revendication 8, **caractérisé en ce que** l'unité de traitement de signal dudit au moins un participant à récepteur d'ultrasons détermine également, par période, la valeur moyenne du signal de réception et **en ce que** ledit au moins un participant à récepteur d'ultrasons transmet les valeurs moyennes par période à l'unité de commande et d'exploitation via le bus de données.

10. Procédé selon la revendication 8 ou 9, **caractérisé en ce que** plusieurs participants à émetteur d'ultrasons et plusieurs participants à récepteur d'ultrasons sont connectés au bus de données.

11. Procédé selon l'une des revendications 8 à 10, **caractérisé en ce que** ledit au moins un participant à émetteur d'ultrasons et ledit au moins un participant à récepteur d'ultrasons ou respectivement une paire formée par un participant à émetteur d'ultrasons et un participant à récepteur d'ultrasons sont conçus comme un participant commun du bus de données, l'émetteur d'ultrasons et le récepteur d'ultrasons étant conçus comme une unité sous la forme d'un transducteur à ultrasons.

12. Procédé selon l'une des revendications 8 à 10, **caractérisé en ce que** plusieurs participants à récepteur d'ultrasons sont connectés au bus de données, le nombre de participants à récepteur d'ultrasons étant supérieur au nombre de participants à émetteur d'ultrasons.

13. Procédé selon l'une des revendications 8 à 12, **caractérisé en ce que** l'unité de commande et d'exploitation détecte un écho potentiel sur la base des valeurs crêtes et, le cas échéant, des valeurs moyennes par période du signal de réception dudit au moins un participant à récepteur d'ultrasons, reçues via le bus de données et détermine sur la base de la durée de temps entre le début de l'émission d'un signal d'émission à ultrasons de type burst et l'apparition de l'écho, la distance séparant d'un obstacle potentiel.
